# EUROPÄISCHE PATENTANMELDUNG

(11) **EP 2 042 840 A2**
(43) Veröffentlichungstag der Anmeldung: **01.04.2009**
(21) Anmeldenummer: 08165265.3
(22) Anmeldetag: 26.09.2008
(51) Int. Cl.: G01D 11/18, G01D 11/24

(54) **Drehsensor mit Schleiferfedern**

(30) Priorität: 29.09.2007 DE 102007046787
(71) Anmelder: Hella KGaA Hueck & Co., 59552 Lippstadt (DE)
(72) Erfinder: Berglar, Heinrich, 59510, Lippetal (DE); Brües, Heinrich, 59590, Geseke (DE)

(57) **Zusammenfassung**

Die Erfindung betrifft einen Drehsensor mit Schleiferfedern. Zur Erleichterung der Montage wird vorgeschlagen, einen Träger auf einer zugehörigen Welle zu verrasten.

## Beschreibung

Die Erfindung betrifft einen Drehsensor mit Schleiferfedern gemäß dem Oberbegriff des Anspruchs 1.

Solche Drehsensoren werden z.B. in Kraftfahrzeugen eingesetzt, um insbesondere eine Drosselklappenstellung anhand der Stellung eines Fahrpedals elektrisch zu steuern.

Aus der EP 818 666 B1 ist ein Widerstandsdrehsensor mit einem Schleiferträger bekannt, bei dem eine Welle und der darauf aufgedrückte Schleiferträger jeweils ein Verbindungselement aufweisen, die durch Ineinanderdrücken verbindbar sind. Hierdurch ist die Position des Schleiferträgers axial zu der Welle justierbar. Auf diese Weise kann ein definiert Abstand zwischen dem Schleiferträger und einer Leiterbahn eingestellt werden. Die Fertigung der Verbindung erfordert geringe Toleranzen, und die Justierung ist relativ aufwändig.

Andere allgemein bekannte Befestigungstechniken wie Ultraschallschweißen oder Heatstaking (Kunststoffbolzen werden heiß ("vernietet") sind ebenfalls aufwändig.

Aufgabe der Erfindung ist es, einen Drehsensor mit Schleiferfedern zu schaffen, der einfach zu fertigen und zu montieren ist, wobei eine sichere Funktion des Sensors gewährleistet ist.

Die Aufgabe ist durch die Merkmale des Anspruchs 1 gelöst. Eine axiale Verrastung zwischen der Welle und dem Träger ist einfach und schnell durchführbar. Für die Fertigung der Welle und des Trägers sind relativ große Toleranzen tolerierbar, so dass diese Teile preiswert hergestellt werden können. Eine Verdrehsicherung zur Verhinderung radialer Verschiebungen zwischen der Welle und dem Träger bewirkt, dass eine Drehbewegung der Welle exakt auf den Träger übertragen wird und die Messung des Sensors entsprechend genau ist. Die Verdrehsicherung kann z.B. nach der Art von Nut und Feder hergestellt sein.

Wenn ein Arm des Trägers unter Vorspannung gegen das Gehäuse abgestützt ist, wird eine axiale Toleranz der Welle und/oder des Trägers sicher ausgeglichen. Als Konsequenz ist ein konstanter Anpressdruck der Schleiferfedern gegen die Leiterplatte gewährleistet.

Eine Neigung des Arms gegen die Welle zur Erzeugung der Vorspannung und eine relativ biegeweiche Stelle des Arm zwischen der Welle und den Schleiferfedern ist einfach mit der Herstellung des Trägers z.B. im Spritzguss realisierbar. Die biegeweiche Stelle ist z.B. als Schwächung des Materials ausgebildet.

Eine Abstützung des Arms gegen das Gehäuse zentrisch zu den Schleiferfedern gewährleistet eine Einhaltung eines definierten Anpressdrucks aller Schleiferfedern gegen die Leiterplatte auch bei zulässigen axialen Verschiebungen des Trägers.

Anhand der beigefügten Zeichnungen wird die Erfindung nachfolgend näher erläutert. Dabei zeigt:
- Fig. 1: eine perspektivische Ansicht eines Gehäuses eines Fahrpedals mit Welle und aufgesetztem Träger
- Fig. 2: einen Deckel mit eingebauter Leiterplatte für das Gehäuse
- Fig. 3: als Detail eine Seitenansicht des Trägers und eines Teils des Gehäuses mit dem Fahrpedal (teilweise geschnitten) vor der Montage und
- Fig. 4: eine Draufsicht auf den Träger gemäß Figur 3.

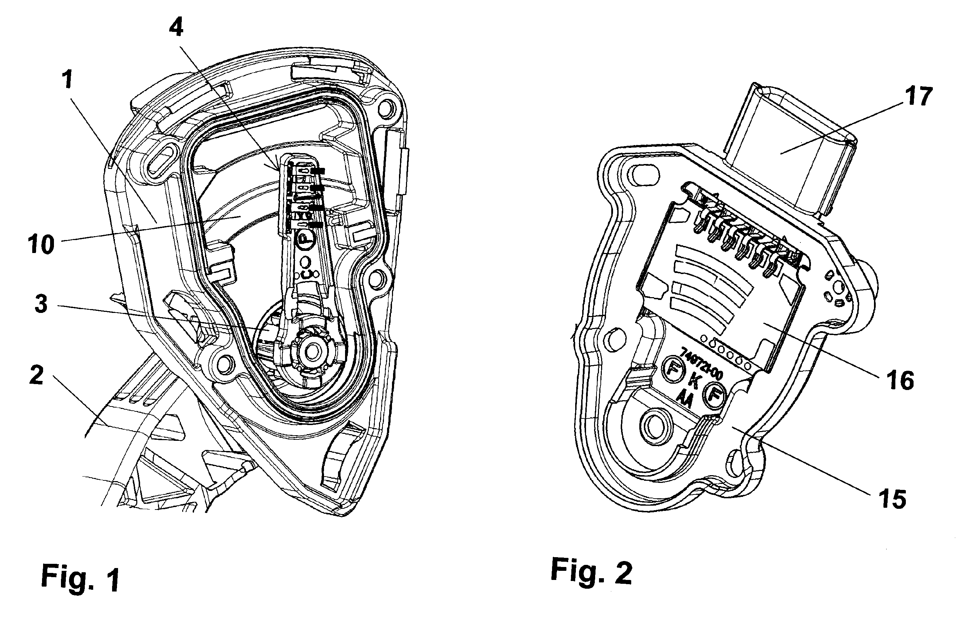

Wie aus der Figur 1 ersichtlich ist in einem Gehäuse 1 ein Fahrpedal 2 um eine Welle 3 drehbar gelagert. Die Welle 3 ist hierbei in einem Endbereich des Pedals 2 einstückig mit diesem und hohl ausgebildet. Ein Schwenkbereich des Pedals 2 ist mechanisch begrenzt.

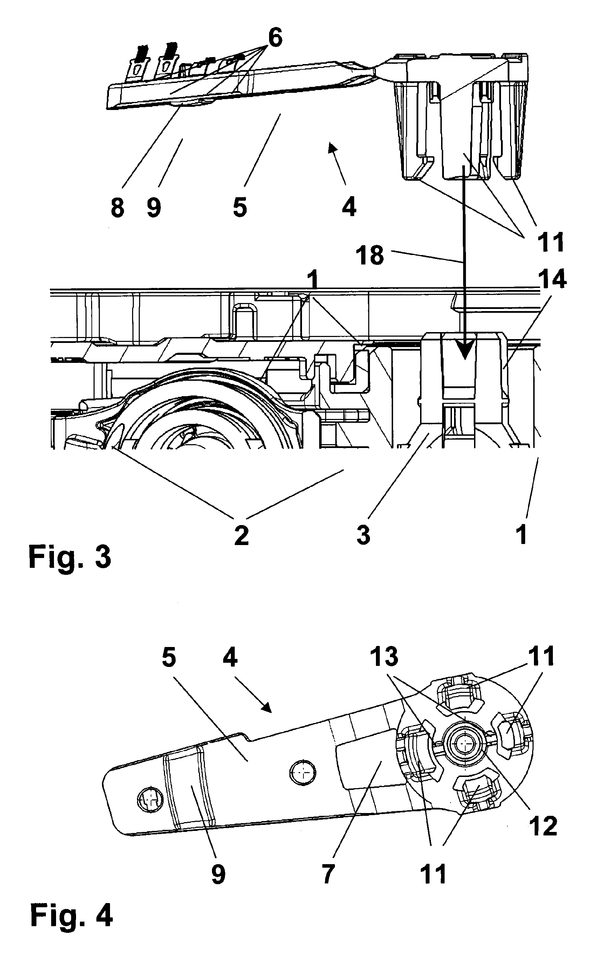

Auf einem Ende der Welle 3 ist ein Träger 4 befestigt, der aus den Figuren 3 und 4 besser ersichtlich ist. Der Träger 4, der in den Figuren 3 und 4 deutlicher dargestellt ist, umfasst einen Arm 5, an dessen ersten, von der Welle 3 beabstandeten Ende vier Schleiferfedern 6 befestigt sind. Diese sind quer zu der Längsachse des Arms 5 hintereinander angeordnet, wobei zwei im Fertigungszustand und zwei in Montagelage dargestellt sind. Der Arm 5 hat in der Draufsicht eine Form in etwa eines spitzen Trapezes und weist einen rechteckigen Querschnitt auf. Um Material einzusparen, ist der Arm 5 hier über einen Teil des Außenumfangs durch eine Rippe verstärkt. Gegenüber dem ersten Ende weist der Arm 5 eine in etwa rechteckige Aussparung 7 auf. Mittig zwischen den Schleiferfedern 6, das ist hier zwischen der zweiten und der dritten Schleiferfeder 6, ist ein schmaler Steg 8 angeordnet, der in montiertem Zustand einen minimalen Abstand des Arms 5 zu einer Leiterplatte 16 und damit den Anpressdruck der Schleiferfedern 6 auf die Leiterplatte 16 definiert. Auf der anderen Seite des Arms 5 ist dem Steg 8 gegenüberliegend ist ein flacher Gleitsteg 9 angeordnet, dem in dem Gehäuse 1 eine entsprechende Gleitbahn 10 zugeordnet ist.

Ein zweites Ende des Trägers 4, das der Welle 3 zugeordnet ist, ist in der Draufsicht kreisförmig. An der den Schleiferfedern 6 gegenüberliegenden Seite des Trägers 4 sind an dem zweiten Ende vier Rastfedern 11 angeordnet, die an ihren Enden jeweils einen Widerhaken aufweisen und mit entsprechenden Ausformungen der Welle 3 korrespondieren. Zentrisch auf dem zweiten Ende ist zwischen den Rastfedern 11 ein Kegelstumpfmantel- förmiger Zentrierdorn 12. Zwischen dem Zentrierdorn 12 und zwei gegenüberliegenden Rastfedern 11 ist jeweils eine Feder 13 als eine Erhebung gebildet, die in montiertem Zustand mit einer in eine Stirnseite der Welle 3 eingelassenen Nut 14 korrespondiert. Hierbei ist jeweils die Weite der Nut 14 geringfügig kleiner als die Dicke der Feder 13.

Zwischen dem Arm 5 und dem zweiten Ende des Trägers 4 ist ein stumpfer Winkel so gebildet, dass das erste Ende leicht in Richtung der Rastfedern 11 abfällt. Hierdurch ist der Arm 5 gegen die Welle 3 geneigt, wenn er auf diese aufgesetzt ist. Wenn der Träger 4 in dem Gehäuse 1 auf der Welle 3 montiert ist, geht die Neigung gegen Null und kann je nach axialem Spiel von der Welle 3 und von dem Träger 4 negativ sein; das heißt, der Arm 5 ist leicht von den Rasfedern 11 weg geneigt.

In einem Übergangsbereich zwischen dem zweiten Ende des Trägers 4 und dem Arm 5 ist eine relativ biegeweiche Stelle ausgebildet, wobei die Biegung um eine Achse in der Ebene des Arms 5 quer zu dessen Längsachse ermöglicht ist. Hierfür ist in diesem Bereich einerseits keine Verstärkungsrippe an dem Außenumfang des Arms 5, und der Längsschnitt des Arms 5 ist bogenförmig verjüngt. Andererseits bewirkt die Aussparung 7 eine Verringerung der Steifheit.

Zum Verschließen des Gehäuses 1 ist ein Deckel 15 angeordnet, der in der Figur 2 dargestellt ist. In dem Deckel 15 ist die Leiterplatte 16 so befestigt, dass in montiertem Zustand die Schleiferfedern 6 auf zugeordneten Schleiferbahnen aufliegen. An dem Deckel 15 ist eine Steckbuchse 17 angeformt, in der mit der Leiterplatte kontaktierte Kontaktdrähte enden.

Zur Montage wird der Träger 4 mit den Rastarmen 11 über das entsprechende Ende der Welle 3 gedrückt (in Figur 3 in Richtung des Pfeils 18) und mittels des Zentrierdorns 12 als Montagehilfe zentriert, bis die Verrastung erfolgt. Hierbei werden die Federn 13 in die Nuten 14 gepresst, so dass ein radiales Spiel zwischen dem Träger 4 und der Welle 3 ausgeschlossen ist. Gleichzeitig wird der Arm 5 unter Vorspannung über den Gleitsteg 9 gegen die Gleitbahn 10 des Gehäuses 1 gedrückt. Anschließend wird der Deckel 15 auf das Gehäuse 1 aufgesetzt und mittels Schrauben befestigt.

Der so montierte Drehsensor ist fertig für einen Einbau in ein Kraftfahrzeug.

### Bezugszeichenliste

- 1: Gehäuse
- 2: Fahrpedal
- 3: Welle
- 4: Träger
- 5: Arm
- 6: Schleiferfeder
- 7: Aussparung
- 8: Steg
- 9: Gleitsteg
- 10: Gleitbahn
- 11: Rastfeder
- 12: Zentrierdorn
- 13: Feder
- 14: Nut
- 15: Deckel
- 16: Leiterplatte
- 17: Steckbuchse
- 18: Pfeil

## Patentansprüche

1. Drehsensor mit Schleiferfedern,
mit einem Gehäuse (1),
mit einem Träger (4), der auf einer Welle (3) eines drehbar gelagerten Hebels (2) befestigbar ist und auf dem die Schleiferfedern (6) befestigt sind,
und mit einer Leiterplatte (16), auf der den Schleiferfedern (6) zugeordnete Schleiferbahnen angeordnet sind,
**dadurch gekennzeichnet, dass** der Träger (4) mit der Welle (3) axial verrastet ist, wobei eine spielfreie Verdrehsicherung zur Verhinderung radialer Verschiebungen zwischen der Welle (3) und dem Träger (4) angeordnet ist.

2. Drehsensor nach Anspruch 1, **dadurch gekennzeichnet, dass** ein Arm (5) des Trägers (4) unter Vorspannung gegen das Gehäuse (1) abgestützt ist.

3. Drehsensor nach Anspruch 2, **dadurch gekennzeichnet, dass** zur Erzeugung der Vorspannung der Arm (5) gegen die Welle (3) geneigt ist und dass der Arm (5) zwischen der Welle (3) und den Schleiferfedern (6) eine relativ biegeweiche Stelle aufweist.

4. Drehsensor nach einem der Ansprüche 1 bis 3, **dadurch gekennzeichnet, dass** der Arm (5) zentrisch zu den Schleiferfedern (6) gegen das Gehäuse (1) abgestützt ist.
